# EUROPÄISCHE PATENTSCHRIFT

(11) **EP 0 721 913 B1**
(45) Veröffentlichungstag und Bekanntmachung des Hinweises auf die Patenterteilung: **08.12.1999**
(21) Anmeldenummer: 96100099.9
(22) Anmeldetag: 05.01.1996
(51) Int. Cl.: B66B 23/24

(54) **Handlauf und Verfahren zur Herstellung desselben**
Hand-rail and fabrication method thereof
Main courante et procédé de sa fabrication

(30) Priorität: 10.01.1995 DE 19500300
(43) Veröffentlichungstag der Anmeldung: 17.07.1996
(73) Patentinhaber: BÖTTCHER TECH GmbH & Co., 53501 Grafschaft-Gelsdorf (DE)
(72) Erfinder: Nagy, György, D-53474 Bad Neuenahr (DE)
(74) Vertreter: Werner, Hans-Karsten, Dr.Dipl.-Chem.

(56) Entgegenhaltungen:
- AT-B- 208 292
- AT-B- 389 689
- DE-B- 1 811 982
- DE-B- 1 920 385

## Beschreibung

Gegenstand der vorliegenden Erfindung sind ein Handlauf mit oder ohne Keil für Fahrtreppen und Fahrsteige, bestehend aus mehreren dauerhaft miteinander verbundenen geformten Schichten, wobei die untere äußere Schicht des Handlaufs teilweise eine Gleitschicht und teilweise eine Mitnahmeschicht bildet, eine innere Schicht mit erhöhter Längsfestigkeit den Zugträger bildet und die obere äußere Schicht die obere elastische Umhüllung des Handlaufs bildet, sowie Verfahren zur Herstellung derselben.

Die DE-A-39 21 888 beschreibt einen gattungsgemäßen Handlauf mit verbessertem Gleit- bzw. Mitnahmeverhalten des Handlaufs sowie Verfahren zur Herstellung desselben. Nicht gelöst ist jedoch die Zentrierung der Zugträgerschicht. Weiterhin findet sich kein Hinweis darauf, wie die sich zwangsläufig ausbildenden Übergänge von einer Schicht zur anderen vor Verschleißangriffen von außen geschützt werden können.

Die US-A-2,893,466 beschreibt Gummifördergurte mit Textil- und Stahlseilanlagen und nicht Handläufe. Dabei werden die Gewebe mittels geeigneter Vorrichtungen zwischen die Stahlseile des im Rohzustand befindlichen Fördergurtes gedrückt. Hierbei soll ein gleicher Seilabstand über die gesamte Gurtbreite erzielt werden. Da die Vorrichtung, mit der die Gewebebahnen zwischen die Seile gedrückt werden, während der Vulkanisation nicht mehr wirksam ist, besteht immer noch die Möglichkeit, daß die Seile und Gewebebahnen während der Vulkanisation sich wieder seitlich verschieben, zumal während der Vulkanisation Fließvorgänge im flüssigen Gummi stattfinden.

Fahrtreppen und Fahrsteige dienen der bequemen und sicheren Personenbeförderung und finden insbesondere in öffentlichen Gebäuden zunehmend Anwendung. Fahrtreppen und Fahrsteige benötigen Handläufe, an welche zunehmende Qualitätsanforderungen gestellt werden. So sollen sie eine geringe Längsdehnung und eine gute Längsflexibilität aufweisen, aber auch hohe Quersteifigkeit. Sie sollen von den Antriebseinrichtungen gut mitgenommen werden, jedoch an Führungselementen gut gleiten. Die Längsflexibilität bei geringer Längsdehnung wird im allgemeinen erreicht durch den Einbau einer inneren Schicht mit erhöhter Längsfestigkeit, die den Zugträger bildet. Diese Schicht besteht im allgemeinen aus gummierten Einzelseilen mit hoher Festigkeit. Diese Seile bestehen vorzugsweise aus Stahl, können aber gewünschtenfalls auch aus entsprechenden Kunststoffen wie Aramid oder Kohlenstoffasern hergestellt werden. Handläufe sind bisher überwiegend C-förmig ausgebildet worden, wobei die beiden Enden auch Lippen genannt werden. Die obere äußere Schicht des Handlaufs bildet die obere elastische Umhüllung und besteht im allgemeinen aus Gummi oder gummiähnlichen Kunststoffen. Diese Schicht kann gewünschtenfalls auch eingefärbt sein.

Die untere äußere Schicht des Handlaufs ist teilweise als Gleitschicht und teilweise als Mitnahmeschicht ausgebildet. Die Mitnahmeschicht kann auch als Keil ausgebildet werden, der über entsprechende keilförmig eingekerbte Antriebsräder mitgenommen wird. In den meisten Fällen reicht es jedoch, wenn diese Schicht glatt ausgebildet ist und aus einem Material besteht, welches einen ausreichend hohen Reibwiderstand aufweist, um von einem entsprechenden Antriebsrad mitgenommen zu werden. Die Innenflanken von C-förmigen Handläufen sind im allgemeinen mit einer Gleitschicht ausgelegt, damit sie über entsprechende Führungselemente mit geringer Reibung und geringem Verschleiß geführt werden können. Diese Gleitschicht wird daher vorzugsweise aus hoch zerreißfesten Kunststoffen mit geringem Reibewiderstand hergestellt. Diese Kunststoffe müssen aber mit dem Material der oberen äußeren Schicht des Handlaufes gut verklebbar oder verschweißbar sein.

Zusätzlich zu den genannten drei Schichten enthalten Handläufe häufig auch noch Schichten aus gummierten Geweben, Fäden oder Fasern, die zwischen dem Zugträger und der oberen äußeren Schicht und/oder der unteren äußeren Schicht angeordnet sind. Diese zusätzlichen Schichten tragen zur Quersteifigkeit bei. Sie können darüber hinaus auch noch etwas zu der erhöhten Längsfestigkeit beitragen, obwohl die Hauptlast der Zugträger aufnimmt, d.h. die innere Schicht mit erhöhter Längsfestigkeit.

Ein großes Problem bei der Herstellung dieser Handläufe besteht darin, daß sich insbesondere die den Zugträger bildende innere Schicht mit erhöhter Längsfestigkeit seitlich versetzt. Diese Schicht wird zwar beim Verpressen eingespannt und somit grob zentriert. Dennoch wird immer wieder beobachtet, daß sich diese innere Schicht seitlich versetzt und dadurch die fertigen Handläufe nicht gerade laufen, sondern zur seitlichen Wanderung neigen. Ein ähnliches Problem besteht bei der Aufbringung der unteren äußeren Schicht des Handlaufes, die teilweise als Gleitschicht und teilweise als Mitnahmeschicht ausgebildet ist. Auch hier stören seitliche Versetzungen sehr und führen unter Umständen zu vorzeitigem Verschleiß. Schließlich bildet die Nahtstelle zwischen zwei verschiedenen Materialien eine gewisse Schwachstelle, die zu vorzeitigem Verschleiß führen kann.

Besonders störend ist die seitliche Versetzung sowohl des Zugträgers als auch der verschiedenen Materialien der unteren äußeren Schicht beim Verbinden der beiden Enden eines offenen Handlaufabschnittes zu einem geschlossenen Ring. An dieser Stelle werden die Stahlseile miteinander verspleißt und erst dann dieses Stück insgesamt übereinandergelegt und miteinander verpreßt. Seitlich versetzte Stahlcordschichten lassen sich nur sehr schwer miteinander verspleißen und führen sowohl zu Schwachstellen als auch zu Stellen mit ungleichmäßiger Seitenwanderung.

Es bestand somit die Aufgabe, diese Nachteile und Schwierigkeiten zu beseitigen, indem dafür gesorgt wird, daß insbesondere die den Zugträger bildende innere Schicht mit erhöhter Längsfestigkeit beim Aufeinanderlegen der Schichten genau zentriert wird und darüber hinaus auch die verschiedenen Materialien der unteren äußeren Schicht genau positioniert werden. Schließlich sollte dafür gesorgt werden, daß die Nahtstellen der verschiedenen Materialien gut miteinander verkleben und nicht zu vorzeitigen Verschleißerscheinungen führen.

Diese Aufgabe konnte jetzt dadurch gelöst werden, daß der Formkern der Presse auf seiner Oberseite mindestens zwei symmetrisch angeordnete, längs verlaufende, gegebenenfalls auch unterbrochene Führungsrippen aufweist, deren Abstand voneinander etwas größer ist als die Breite der inneren Schicht mit der erhöhten Längsfestigkeit. Vorzugsweise weisen der Formkern und/oder das Formunterteil mindestens zwei weitere längs verlaufende Führungsrippen auf in dem Bereich, der die Handlauflippen bildet.

Die Führungsrippen auf der Oberseite des Formkerns der Presse können gegebenenfalls auch unterbrochen sein, da es völlig ausreicht, den Zugträger nur in gewissen Abständen zu zentrieren und zu justieren. Die weiteren Führungsrippen am Formkern und/oder Formunterteil sollten durchgehend sein, da sie dazu dienen, die verschiedenen Bereiche der unteren äußeren Schicht miteinander zu verbinden und diese Verbindungsstelle zu schützen.

Die Höhe der Führungsrippen beträgt im allgemeinen 0,5 bis 5 mm. Eine Höhe von 2 bis 3 mm hat sich als optimal erwiesen.

Diese Führungsrippen führen dazu, daß die erfindungsgemäßen Handläufe an der unteren äußeren Schicht mindestens zwei symmetrisch angeordnete, längs verlaufende Vertiefungen aufweisen, deren Abstand voneinander etwas größer ist als die Breite der inneren Schicht mit der erhöhten Längsfestigkeit. Diese Vertiefung kann auch unterbrochen sein, wenn die Führungsrippen unterbrochen sind. Die weiteren längs verlaufenden Führungsrippen führen dazu, daß die Handläufe mindestens zwei weitere längs verlaufende Vertiefungen aufweisen, und zwar auf den Lippen des Handlaufs. In den gegebenenfalls unterbrochenen Vertiefungen befindet sich vorzugsweise die Nahtstelle zwischen der Mitnahmeschicht in der Mitte und den beiden seitlichen Gleitschichten. Besonders bevorzugt ist, wenn sich auch die Nahtstelle zwischen den Gleitschichten und der oberen elastischen Umhüllung des Handlaufs in einer derartigen Vertiefung befindet.

Die Vertiefungen bzw. Rillen an der Unterseite von Händläufen sowie im Bereich der Lippen führen an sich zu einer Schwächung der Stabilität des Handlaufes. Diese Schwächung ist jedoch ohne Bedeutung, da der Handlauf in diesen Bereichen praktisch nicht mechanisch beansprucht wird. Statt dessen sind erfindungsgemäß die Nahtstellen verschiedener Materialien in diesen Vertiefungen bzw. Rillen untergebracht, so daß diese potentiellen Schwachstellen vor mechanischer Beanspruchung geschützt werden. Diese Vorteile gelten auch für Handläufe, bei denen die Mitnahmeschicht als Keil ausgebildet ist. Diese keilförmige Ausbildung der Mitnahmeschicht führt zu einer verstärkten Mitnahme bei verstärkter Belastung. Die keilförmige Ausgestaltung kommt daher vorzugsweise für Handläufe in Frage, die erhöhten Belastungen ausgesetzt sind.

Die dauerhafte Verbindung der verschiedenen Schichten erfolgt in an sich bekannter Weise durch Verpressen in einer beheizten Presse. Dies ist insbesondere dann notwendig, wenn es sich um Gummimischungen handelt, die unter diesen Bedingungen erst vulkanisiert werden. Prinzipiell können aber auch andere Materialien als Gummi zu Schichten miteinander verklebt oder verschweißt werden, wobei auf den Einsatz von organischen Lösungsmitteln nach Möglichkeit verzichtet werden sollte.

Die erfindungsgemäßen Handläufe neigen somit nicht mehr zur Seitenwanderung. Sie lassen sich an den Antriebs- und Umlenkrädern gut zentrieren und vermeiden den Verschleiß der Lippen an den Randzonen der Radkörper. Dadurch, daß die Nahtstellen zwischen verschiedenen Materialien in den Vertiefungen untergebracht sind, kommen sie auch nicht mit den Antriebs- oder Umlenkrädern in direkte Berührung und werden somit auch wesentlich weniger mechanisch beansprucht. Bei der Verbindung der beiden Enden eines offenen Handlaufs zu einem geschlossenen Ring ist es ohne weiteres möglich, die Stahlseile so miteinander zu verspleißen, daß eine stabile und gut zentrierte Verbindung entsteht. Es ist somit ohne weiteres möglich, die geforderten Zerreißfestigkeiten von 25000 N einzuhalten.

## Patentansprüche

1. Handlauf mit oder ohne Keil für Fahrtreppen und Fahrsteige, bestehend aus mehreren dauerhaft miteinander verbundenen geformten Schichten, wobei die untere äußere Schicht des Handlaufs teilweise eine Gleitschicht und teilweise eine Mitnahmeschicht bildet, eine innere Schicht mit erhöhter Längsfestigkeit den Zugträger bildet und die obere äußere Schicht die obere elastische Umhüllung des Handlaufs bildet, dadurch gekennzeichnet, daß die untere äußere Schicht mindestens zwei symmetrisch angeordnete, längs verlaufende Vertiefungen aufweist, deren Abstand voneinander etwas größer ist als die Breite der inneren Schicht mit der erhöhten Längsfestigkeit.

2. Handlauf gemäß Anspruch 1, dadurch gekennzeichnet, daß der Handlauf mindestens zwei weitere längs verlaufende Vertiefungen aufweist auf den Lippen des Handlaufs.

3. Handlauf gemäß Anspruch 1 oder 2, dadurch gekennzeichnet, daß zwischen den längs verlaufenden Vertiefungen die untere äußere Schicht als Mitnahmeschicht und/oder als Keil ausgebildet ist.

4. Handlauf gemäß einem der Ansprüche 1 bis 3, dadurch gekennzeichnet, daß außerhalb der längs verlaufenden Vertiefungen die untere äußere Schicht als Gleitschicht ausgebildet ist.

5. Handlauf gemäß Anspruch 4, dadurch gekennzeichnet, daß die Gleitschicht bis zu den weiteren längs verlaufenden Vertiefungen reicht.

6. Verfahren zur Herstellung eines Handlaufs gemäß einem der Ansprüche 1 bis 5 durch übereinanderlegen und dauerhaftes Verbinden von mehreren Schichten in einer vorzugsweise beheizten Presse, wobei die untere äußere Schicht des Handlaufs teilweise eine Gleitschicht und teilweise eine Mitnahmeschicht bildet, eine innere Schicht mit erhöhter Längsfestigkeit den Zugträger bildet und die obere äußere Schicht die obere elastische Umhüllung des Handlaufs bildet, dadurch gekennzeichnet, daß ein Formkern in der Presse verwendet wird, welcher auf seiner Oberseite mindestens zwei symmetrisch angeordnete, längs verlaufende, gegebenenfalls auch unterbrochene Führungsrippen aufweist, deren Abstand voneinander etwas größer ist als die Breite der inneren Schicht mit der erhöhten Längsfestigkeit, wobei gegebenenfalls der Formkern und/oder das Formunterteil mindestens zwei weitere längs verlaufende Führungsrippen aufweist in dem Bereich, der die Handlauflippen bildet.

7. Verfahren gemäß Anspruch 6, dadurch gekennzeichnet, daß die Höhe der Führungsrippen 0,5 bis 5 mm beträgt.

## Claims

1. A handrail with or without a wedge for escalators and speedwalks consisting of a number of permanently connected molded layers wherein the lower outer layer of said handrail in part constitutes a slide layer and in part constitutes a conveyor layer, an inner layer having increased longitudinal strength constitutes the traction carrier, and the upper outer layer constitutes the uppermost elastic coating of said handrail, characterized in that said lower outer layer has at least two symmetrically arranged longitudinal grooves whose spacing is somewhat larger than the width of said inner layer having increased longitudinal strength.

2. The handrail according to claim 1, characterized in that said handrail has at least two additional longitudinal grooves at the lips of said handrail.

3. The handrail according to claim 1 or 2, characterized in that between said longitudinal grooves said lower outer layer constitutes a conveyor layer and/or is made into a wedge.

4. The handrail according to any of claims 1 to 3, characterized in that outside said longitudinal grooves said lower outer layer constitutes a slide layer.

5. The handrail according to claim 4, characterized in that said slide layer extends to said additional longitudinal grooves.

6. A process for the preparation of a handrail according to any of claims 1 to 5 by placing on top of one another and permanently connecting a number of layers within a press which is preferably heated wherein the lower outer layer of said handrail in part constitutes a slide layer and in part constitutes a conveyor layer, an inner layer having increased longitudinal strength constitutes the traction carrier, and the upper outer layer constitutes the uppermost elastic coating of said handrail, characterized in that a mold core is used in said press which has at least two symmetrically arranged longitudinal guide ribs on its upper side which may optionally be interrupted and whose spacing is somewhat larger than the width of said inner layer having increased longitudinal strength wherein said mold core and/or the mold cavity optionally have at least two additional longitudinal guide ribs in the region constituting the handrail lips.

7. The process according to claim 6, characterized in that the height of said guide ribs is from 0.5 to 5 mm.

## Revendications

1. Main courante avec ou sans coin pour escaliers mécaniques et trottoirs roulants, composée de plusieurs couches moulées reliées les unes aux autres de manière permanente, la couche extérieure inférieure de la main courante formant partiellement une couche de glissement et partiellement une couche d'entraînement, une couche intérieure de résistance longitudinale accrue formant le tirant et la couche extérieure supérieure formant l'enveloppe élastique supérieure de la main courante, caractérisée en ce que la couche extérieure inférieure comporte au moins deux gorges longitudinales, disposées symétriquement, dont la distance de l'une à l'autre est un peu supérieure à la largeur de la couche intérieure de résistance logitudinale accrue.

2. Main courante selon la revendication 1, caractérisée en ce que la main courante comporte au moins deux autres gorges longitudinales sur les lèvres de la main courante.

3. Main courante selon la revendication 1, caractérisée en ce que, entre les gorges longitudinales, la couche extérieure inférieure a la forme d'une couche d'entraînement et/ou d'un coin.

4. Main courante selon l'une des revendications 1 à 3, caractérisée en ce que, à l'extérieur des gorges longitudinales, la couche extérieure inférieure a la forme d'une couche de glissement.

5. Main courante selon la revendication 4, caractérisée en ce que la couche de glissement s'étend jusqu'aux autres gorges longitudinales.

6. Procédé de fabrication d'une main courante selon l'une des revendications 1 à 5 par superposition et liaison permanente de plusieurs couches dans une presse de préférence chauffée, la couche extérieure inférieure de la main courante formant partiellement une couche de glissement et partiellement une couche d'entraînement, une couche intérieure de résistance longitudinale accrue formant le tirant et la couche extérieure supérieure formant l'enveloppe élastique supérieure de la main courante, caractérisé en ce qu'on utilise dans la presse un noyau qui comporte sur sa face supérieure au moins deux nervures de guidage, disposées symétriquement, éventuellement aussi interrompues, dont la distance de l'une à l'autre est un peu supérieure à la largeur de la couche intérieure de résistance longitudinale accrue, le noyau et/ou la partie inférieure du moule comportant éventuellement deux autres nervures de guidage longitudinales dans la zone qui forme les lèvres de la main courante.

7. Procédé selon la revendication 6, caractérisé en ce que la hauteur des nervures de guidage a une valeur de 0,5 à 5 mm.
